# EUROPEAN PATENT APPLICATION

(11) **EP 4 621 202 A1**
(43) Date of publication of application: **24.09.2025**
(21) Application number: 25160743.8
(22) Date of filing: 27.02.2025
(51) Int. Cl.: F02C 7/12, B64D 27/33, B64D 31/18, F01D 15/10, F02K 5/00

(54) **FAULT TOLERANT THERMAL MANAGEMENT SYSTEM FOR HYBRID ELECTRIC SYSTEM**

(30) Priority: 18.03.2024 US 202418607677
(71) Applicant: GE Aerospace Poland Sp. z o.o., 02-256 Warsaw (PL); General Electric Company, Cincinnati, Ohio 45215 (US)
(72) Inventor: WANG, Libing, Ohio, 45040 (US); WANG, Honggang, Niskayuna, 12309 (US); HE, Lijun, Niskayuna, 12309 (US); PAZINSKI, Adam Tomasz, PL 02-256 Warsaw (PL); HUH, Kum Kang, Niskayuna, 12309 (US); ZHANG, Yichao, Niskayuna, 12309 (US)
(74) Representative: Openshaw & Co.

(57) **Abstract**

A hybrid-electric propulsion system (150) includes a gas turbine engine (210A, 210B) comprising a high pressure system (234, 236, 238) and a low pressure system (242, 244, 246), an electric machine (300A, 300B, 302A) coupled to one of the high pressure system (234, 236, 238) or the low pressure system (242, 244, 246), and a thermal management system (306) defining one or more thermal management system flowpaths (307, 401) to provide one or more heat exchange fluids to the electric machine (300A, 300B, 302A). A controller (182) collects one or more signals from one or more sensing nodes (438) connected to at least one of the thermal management system flowpaths (307, 401) or the electric machine (300A, 300B, 302A), analyzes the one or more signals to detect a thermal anomaly corresponding to at least one of the electric machine (300A, 300B, 302A) or the thermal management system (306), and responsive to detecting the thermal anomaly, performs at least one of adjusting a flow of at least one heat exchange fluid of the one or more heat exchange fluids or derating the electric machine (300A, 300B, 302A).

## Description

### FIELD

The present disclosure relates to a fault tolerant thermal management system for hybrid electric system.

### BACKGROUND

A conventional commercial aircraft generally includes a fuselage, a pair of wings, and a propulsion system that provides thrust. The propulsion system typically includes at least two aircraft engines, such as turbofan jet engines. Each turbofan jet engine is typically mounted to a respective one of the wings of the aircraft, such as in a suspended position beneath the wing separated from the wing and fuselage.

Hybrid-electric propulsion systems are being developed to improve the efficiency of conventional commercial aircraft. Some hybrid electric propulsion systems include one or more electric machines each being mechanically coupled with a rotating component of one of the aircraft engines. The electric machines can each have an associated power electronics assembly electrically connected thereto including a power converter and power distribution or management units.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 provides a schematic top view of an aircraft having a hybrid-electric propulsion system according to various exemplary embodiments of the present disclosure.
FIG. 2 provides a schematic cross-sectional view of one of the hybrid-electric-capable propulsors of the aircraft of FIG. 1.
FIG. 3 is a simplified, schematic view of a thermal management system for an aeronautical power system in accordance with an exemplary aspect of the present disclosure.
FIG. 4 is a simplified, schematic view of a thermal management system for an aeronautical power system in accordance with an exemplary aspect of the present disclosure.
FIG. 5 is a block diagram view of a thermal management system for an aeronautical power system in accordance with an exemplary aspect of the present disclosure.
FIG. 6 is a block diagram depicting a controller of a thermal management system for an aeronautical power system in accordance with an exemplary aspect of the present disclosure.
FIG. 7 depicts a look-up table of a thermal management system for an aeronautical power system in accordance with an exemplary aspect of the present disclosure.
FIG. 8 depicts a look-up table of a thermal management system for an aeronautical power system in accordance with an exemplary aspect of the present disclosure.
FIG. 9 is a block diagram depicting a method for thermal management of an aeronautical power system in accordance with an exemplary aspect of the present disclosure.
FIG. 10 is a block diagram depicting a method for thermal management of an aeronautical power system in accordance with an exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to a flow in a pathway. For example, with respect to a fluid flow, "upstream" refers to the direction from which the fluid flows, and "downstream" refers to the direction to which the fluid flows. However, the terms "upstream" and "downstream" as used herein may also refer to a flow of electricity.

The integration of electric machines with varied power ratings (e.g., a low pressure (LP) electric machine rotatable with an LP system of an engine rated at a higher power than a high pressure (HP) electric machine rotatable with an HP system of the engine) within a restricted space of a gas turbine engine may provide several challenges. For example, by having separate power ratings, thermal management becomes more complex as there are more tailored thermal needs for each of the various components associated with LP and HP electric machines, including the power electronics assemblies electrically connected to the LP and HP electric machines that convert and distribute power to the various components of the gas turbine engine or aircraft.

In order to address the above issues, the present disclosure provides a thermal management system tailored to meet the thermal needs of the LP and HP electric machines and the power distribution components associated with the LP and HP electric machines. The present disclosure provides cooling flowpaths for the hybrid electric systems and a fault tolerant control system for detecting and managing thermal aspects of the hybrid electric systems. Embedded electric machines generally rely on open-loop variable bleed valve (VBV) air cooling of the stator end windings via impingement as well as the rotor via convective cooling. The electric machine may also be cooled by a closed oil loop with a pump and an air-cooled oil cooler. The electric machine may suffer overheating conditions due to inadequacy or interruption from the cooling air channel and the cooling oil channel, such as by channel blockage, low flowrate, leakage, etc., three phase current imbalance, or thermal sensor malfunction. If the electric machine begins to overheat because of insufficient cooling, it could cause the alternator to overheat resulting in the damaging and weakening of the insulation inside the electric machine. Embodiments of the present disclosure provide enhanced thermal cooling availability even during a thermal sensor malfunction. Embodiments of the present disclosure also enable early thermal anomaly detection based on thermal and electrical signature. Embodiments of the present disclosure also improve the mitigation actions in response to the detection of a thermal anomaly by, in addition to power derating of the electric machine, active coolant control with bypass air flow and interactive air and oil coolant support for the electric machine and the connected power electronic assemblies.

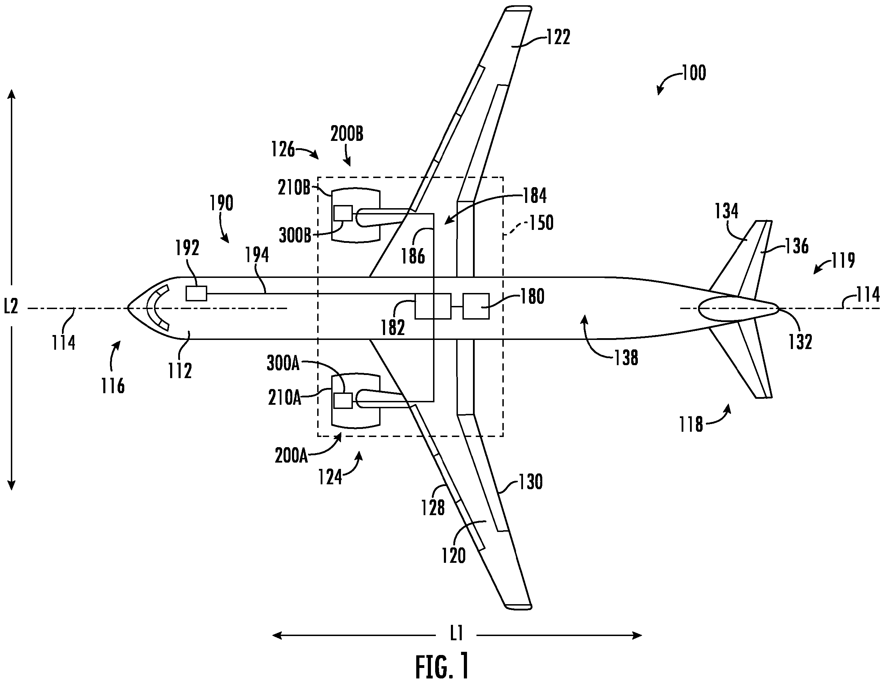

Referring now to the drawings, wherein identical numerals indicate the same elements throughout the figures, FIG. 1 provides a schematic top view of an exemplary aircraft 100 as may incorporate one or more inventive aspects of the present disclosure. As shown in FIG. 1, for reference, the aircraft 100 defines a longitudinal direction L1 and a lateral direction L2. The lateral direction L2 is perpendicular to the longitudinal direction L1. The aircraft 100 also defines a longitudinal centerline 114 that extends therethrough along the longitudinal direction L1. The aircraft 100 extends between a forward end 116 and an aft end 118, e.g., along the longitudinal direction L1.

As depicted, the aircraft 100 includes a fuselage 112 that extends longitudinally from the forward end 116 of the aircraft 100 to the aft end 118 of the aircraft 100. The aircraft 100 also includes an empennage 119 at the aft end 118 of the aircraft 100. In addition, the aircraft 100 includes a wing assembly including a first, port side wing 120 and a second, starboard side wing 122. The first and second wings 120, 122 each extend laterally outward with respect to the longitudinal centerline 114. The first wing 120 and a portion of the fuselage 112 together define a first side 124 of the aircraft 100 and the second wing 122 and another portion of the fuselage 112 together define a second side 126 of the aircraft 100. For the embodiment depicted, the first side 124 of the aircraft 100 is configured as the port side of the aircraft 100 and the second side 126 of the aircraft 100 is configured as the starboard side of the aircraft 100.

The aircraft 100 includes various control surfaces. For this embodiment, each wing 120, 122 includes one or more leading edge flaps 128 and one or more trailing edge flaps 130. The aircraft 100 further includes, or more specifically, the empennage 119 of the aircraft 100 includes a vertical stabilizer 132 having a rudder flap (not shown) for yaw control and a pair of horizontal stabilizers 134 each having an elevator flap 136 for pitch control. The fuselage 112 additionally includes an outer surface or skin 138. It should be appreciated that in other exemplary embodiments of the present disclosure, the aircraft 100 may additionally or alternatively include any other suitable configuration. For example, in other embodiments, the aircraft 100 may include any other control surface configuration.

The exemplary aircraft 100 of FIG. 1 also includes a hybrid-electric propulsion system 150. For this embodiment, the hybrid-electric propulsion system 150 has a first propulsor 200A and a second propulsor 200B both operable to produce thrust. The first propulsor 200A is mounted to the first wing 120 and the second propulsor 200B is mounted to the second wing 122. Moreover, for the embodiment depicted, the first propulsor 200A and second propulsor 200B are each configured in an underwing-mounted configuration. However, in other example embodiments, one or both of the first and second propulsors 200A, 200B may be mounted at any other suitable location in other exemplary embodiments.

The first propulsor 200A includes a gas turbine engine 210A and one or more electric machines, such as electric machine 300A mechanically coupled with the gas turbine engine 210A. The electric machine 300A can be an electric generator, an electric motor, or a combination generator/motor. For this example embodiment, the electric machine 300A is a combination generator/motor. In this manner, when operating as an electric generator, the electric machine 300A can generate electrical power when driven by the gas turbine engine 210A. When operating as an electric motor, the electric machine 300A can drive or motor the gas turbine engine 210A.

Likewise, the second propulsor 200B includes a gas turbine engine 210B and one or more electric machines, such as electric machine 300B mechanically coupled with the gas turbine engine 210B. The electric machine 300B can be an electric generator, an electric motor, or a combination generator/motor. For this example embodiment, the electric machine 300B is a combination generator/motor. In this manner, when operating as an electric generator, the electric machine 300B can generate electrical power when driven by the gas turbine engine 210B. When operating as an electric motor, the electric machine 300B can drive or motor a spool of the gas turbine engine 210B. Electric machine 300B can be configured and can operate in a similar manner as electric machine 300A described herein.

The hybrid-electric propulsion system 150 further includes an electric energy storage unit 180 electrically connectable to the electric machines 300A, 300B, and in some embodiments, other electrical loads. In some exemplary embodiments, the electric energy storage unit 180 may include one or more batteries. Additionally, or alternatively, the electric energy storage units 180 may include one or more supercapacitor arrays, one or more ultracapacitor arrays, or both. For the hybrid-electric propulsion system 150 described herein, the electric energy storage unit 180 is configured to store a relatively large amount of electrical power. For example, in certain exemplary embodiments, the electric energy storage unit 180 may be configured to store at least about fifty kilowatt hours of electrical power, such as about seventy-five kilowatt hours of electrical power, and up to about one thousand kilowatt hours of electrical power.

The hybrid-electric propulsion system 150 also includes a power management system having a controller 182 and a power bus 184. The electric machines 300A, 300B, the electric energy storage unit 180, and the controller 182 are each electrically connectable to one another through one or more electric lines 186 of the power bus 184.

The controller 182 is configured to control the power electronics to distribute electrical power between the various components of the hybrid-electric propulsion system 150. For example, the controller 182 may control the power electronics of the power bus 184 to provide electrical power to, or draw electrical power from, the various components, such as the electric machines 300A, 300B, to operate the hybrid-electric propulsion system 150 between various operating modes and perform various functions. Such is depicted schematically as the electric lines 186 of the power bus 184 extend through the controller 182.

The controller 182 can form a part of a computing system 190 of the aircraft 100. The computing system 190 of the aircraft 100 can include one or more processors and one or more memory devices embodied in one or more computing devices. For instance, as depicted in FIG. 1, the computing system 190 includes controller 182 as well as other computing devices, such as computing device 192. The computing system 190 can include other computing devices as well, such as engine controllers (not shown). The computing devices of the computing system 190 can be communicatively coupled with one another via a communication network. For instance, computing device 192 is located in the cockpit of the aircraft 100 and is communicatively coupled with the controller 182 of the hybrid-electric propulsion system 150 via a communication link 194 of the communication network. The communication link 194 can include one or more wired or wireless communication links.

For this embodiment, the computing device 192 is configured to receive and process inputs, e.g., from a pilot or other crew members, and/or other information. In this manner, as one example, the one or more processors of the computing device 192 can receive an input indicating a command to change a thrust output of the first and/or second propulsors 200A, 200B and can cause, in response to the input, the controller 182 to control the electrical power drawn from or delivered to one or both of the electric machines 300A, 300B to ultimately change the thrust output of one or both of the first and second propulsors 200A, 200B.

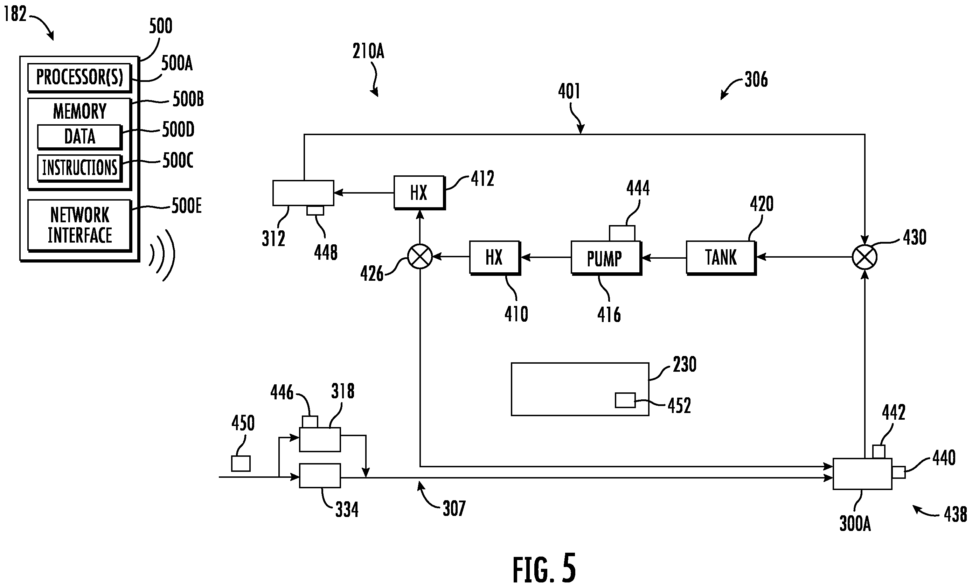

The controller 182 and other computing devices of the computing system 190 of the aircraft 100 may be configured in substantially the same manner as the exemplary computing devices 500 described below with reference to FIG. 5.

It will be appreciated that the electric machines 300A, 300b, electric energy storage unit 180, and power management system (having the controller 182 and the power bus 184) may more specifically be configured as part of an aeronautical power system integrated with the gas turbine engines of the hybrid-electric propulsion system 150.

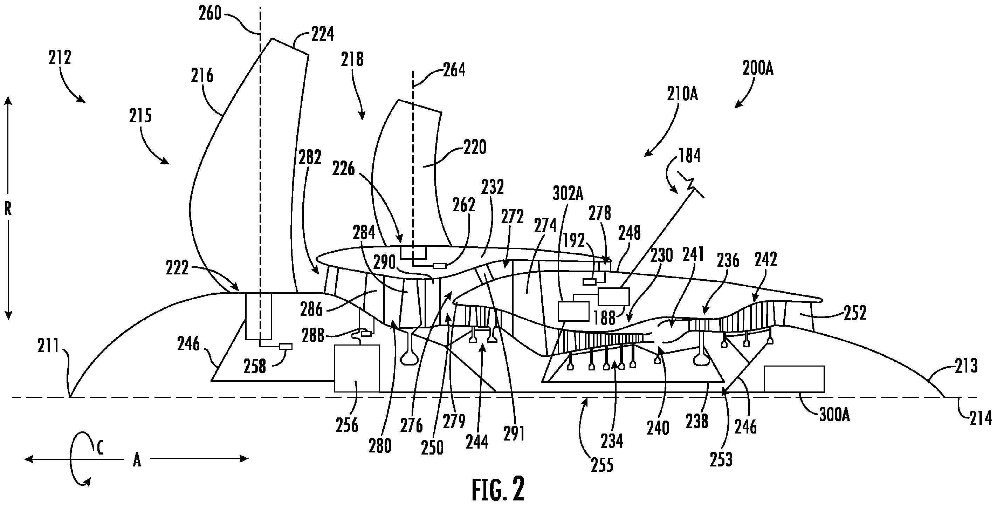

FIG. 2 provides a schematic view of the first propulsor 200A of the hybrid-electric propulsion system 150 of the aircraft 100 of FIG. 1. Although the first propulsor 200A is shown, it will be appreciated that the second propulsor 200B can be configured in the same or similar manner as the first propulsor 200A depicted in FIG. 2. The exemplary gas turbine engine of FIG. 2 is configured as a single unducted rotor engine 210A with a single stage of unducted rotor blades. In such a manner, the rotor assembly may be referred to herein as an "unducted fan." In addition, the gas turbine engine 210A of FIG. 2 includes a third stream extending from the compressor section to a rotor assembly flowpath over the turbomachine, as will be explained in more detail below.

For reference, the gas turbine engine 210A defines an axial direction A, a radial direction R, and a circumferential direction C. Moreover, the gas turbine engine 210A defines an axial centerline or longitudinal axis 214 that extends along the axial direction A. In general, the axial direction A extends parallel to the longitudinal axis 214, the radial direction R extends outward from and inward to the longitudinal axis 214 in a direction orthogonal to the axial direction A, and the circumferential direction extends three hundred sixty degrees (360°) around the longitudinal axis 214. The gas turbine engine 210A extends between a forward end 211 and an aft end 213, e.g., along the axial direction A.

The gas turbine engine 210A includes a turbomachine 230 and a rotor assembly 212, also referred to as a fan section, positioned upstream thereof. Generally, the turbomachine 230 includes, in serial flow order, a compressor section, a combustion section, a turbine section, and an exhaust section. Particularly, as shown in FIG. 2, the turbomachine 230 includes a core cowl 248 that defines an annular core inlet 250. The core cowl 248 further encloses at least in part a low speed or low pressure system and a high speed or high pressure system. For example, the core cowl 248 depicted encloses and supports at least in part a booster or low speed or low pressure compressor 244 for pressurizing the air that enters the turbomachine 230 through core inlet 250. A high speed or high pressure, multi-stage, axial-flow compressor 234 receives pressurized air from the low pressure compressor 244 and further increases the pressure of the air. The pressurized air stream flows downstream to a combustor 240 of the combustion section where fuel is injected into the pressurized air stream and ignited to raise the temperature and energy level of the pressurized air.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems, and are not meant to imply any absolute speed and/or pressure values.

The high energy combustion products flow from the combustor 240 downstream to a high pressure turbine 236. The high pressure turbine 236 drives the high pressure compressor 234 through a high pressure shaft 238. **In** this regard, the high pressure turbine 236 is drivingly coupled with the high pressure compressor 234. The high speed compressor 234, the high speed turbine 236, and the high speed shaft 238 may collectively be referred to as a high speed spool 253 of the gas turbine engine 210A. The high energy combustion products then flow to a low pressure turbine 242. The low pressure turbine 242 drives the low pressure compressor 244 and components of the rotor assembly 212 through a low pressure shaft 246. **In** this regard, the low pressure turbine 242 is drivingly coupled with the low pressure compressor 244 and components of the rotor assembly 212. The low speed compressor 244, the low speed turbine 242, and the low pressure shaft 246 may collectively be referred to as a low speed spool 255 of the gas turbine engine 210A. The low pressure shaft 246 is coaxial with the high pressure shaft 238 in this example embodiment. After driving each of the turbines 236, 242, the combustion products exit the turbomachine 230 through a turbomachine exhaust nozzle 252.

Accordingly, the turbomachine 230 defines a working gas flowpath or core duct 241 that extends between the core inlet 250 and the turbomachine exhaust nozzle 252. The core duct 241 is an annular duct positioned generally inward of the core cowl 248 along the radial direction R. The core duct 241 (e.g., the working gas flowpath through the turbomachine 230) may be referred to as a second stream.

The rotor assembly 212 includes a fan 215, which is the primary fan in this example embodiment. For the depicted embodiment of FIG. 2, the fan 215 is an open rotor or unducted fan 215. **In** such a manner, the gas turbine engine 210A may be referred to as an open rotor engine.

As depicted, the fan 215 includes an array of airfoils arranged around the longitudinal axis 214 of engine 210A, and more particularly includes an array of fan blades 216 (only one shown in FIG. 2) arranged around the longitudinal axis 214 of engine 210A. The fan blades 216 are rotatable, e.g., about the longitudinal axis 214. As noted above, the fan 215 is drivingly coupled with the low pressure turbine 242 via the low pressure shaft 246. For the embodiments shown in FIG. 2, the fan 215 is coupled with the low pressure shaft 246 via a power or speed reduction gearbox 256, e.g., in an indirect-drive or geared-drive configuration.

Moreover, the array of fan blades 216 can be arranged in equal spacing around the longitudinal axis 214. Each fan blade 216 has a proximal end or root 222 and a distal end or tip 224, with respect to the longitudinal axis 214, and a span defined therebetween. Each fan blade 216 defines a pitch change or central blade axis 260. For this embodiment, each fan blade 216 of the rotor assembly 212 is rotatable about its central blade axis 260, e.g., in unison with one another. A pitch change mechanism 258 in the form or one or more actuators is provided to facilitate such rotation and therefore may be used to change a pitch of the fan blades 216 about their respective central blade axes 260.

An array of airfoils positioned aft of the fan blades 216 and also disposed around longitudinal axis 214, and more particularly includes a fan guide vane assembly 218 that includes fan guide vanes 220 (only one shown in FIG. 2) disposed around the longitudinal axis 214. For this embodiment, the fan guide vanes 220 are not rotatable about the longitudinal axis 214. Each fan guide vane 220 has a proximal end or root 226 and a distal end or tip 228, with respect to the longitudinal axis 214, and a span defined therebetween. The fan guide vanes 220 may be unshrouded as shown in FIG. 2 or, alternatively, may be shrouded, e.g., by an annular shroud spaced outward from the tips of the fan guide vanes 220 along the radial direction R or attached to the fan guide vanes 220.

Each fan guide vane 220 defines a central guide vane axis 264. For this embodiment, each fan guide vane 220 of the fan guide vane assembly 218 is rotatable about its respective central guide vane axis 264, e.g., in unison with one another. One or more pitch change mechanisms 262 in the form of one or more actuators are provided to facilitate such rotation and therefore may be used to change a pitch of the fan guide vane 220 about its respective central guide vane axis 264. However, in other embodiments, each fan guide vane 220 may be fixed or unable to be pitched about its central guide vane axis 264. The fan guide vanes 220 are mounted to a fan cowl 232.

As shown in FIG. 2, in addition to the fan 215, which is unducted, a ducted fan 284 is included aft of the fan 215, such that the gas turbine engine 210A includes both a ducted and an unducted fan which both serve to generate thrust through the movement of air without passage through at least a portion of the turbomachine 230 (e.g., without passage through the high pressure compressor 234 and combustion section for the embodiment depicted). The ducted fan 284 is rotatable about the same axis (e.g., the longitudinal axis 214) as the fan blade 216. The ducted fan 284 is, for the embodiment depicted, driven by the low pressure turbine 242 (e.g. coupled to the low pressure shaft 246). In the embodiment depicted, as noted above, the fan 215 may be referred to as the primary fan, and the ducted fan 284 may be referred to as a secondary fan. It will be appreciated that these terms "primary" and "secondary" are terms of convenience, and do not imply any particular importance, power, or the like.

The ducted fan 284 includes a plurality of fan blades (not separately labeled in FIG. 2) arranged in a single stage, such that the ducted fan 284 may be referred to as a single stage fan. The fan blades of the ducted fan 284 can be arranged in equal spacing around the longitudinal axis 214. Each blade of the ducted fan 284 has a proximal end or root and a distal end or tip and a span defined therebetween.

The fan cowl 232 annularly encases at least a portion of the core cowl 248 and is generally positioned outward of at least a portion of the core cowl 248 along the radial direction R. Particularly, a downstream section of the fan cowl 232 extends over a forward portion of the core cowl 248 to define a fan duct flowpath, or simply a fan duct 272. According to this embodiment, the fan flowpath or fan duct 272 may be understood as forming at least a portion of the third stream of the engine 210A.

Incoming air may enter through the fan duct 272 through a fan duct inlet 276 and may exit through a fan exhaust nozzle 278 to produce propulsive thrust. The fan duct 272 is an annular duct positioned generally outward of the core duct 241 along the radial direction R. The fan cowl 232 and the core cowl 248 are connected together and supported by a plurality of substantially radially-extending, circumferentially-spaced stationary struts 274 (only one shown in FIG. 2). The stationary struts 274 may each be aerodynamically contoured to direct air flowing thereby. Other struts in addition to the stationary struts 274 may be used to connect and support the fan cowl 232, the core cowl 248, or both. In many embodiments, the fan duct 272 and the core duct 241 may at least partially co-extend (generally axially) on opposite sides (e.g., opposite radial sides) of the core cowl 248. For example, the fan duct 272 and the core duct 241 may each extend directly from a leading edge 279 of the core cowl 248 and may partially co-extend generally axially on opposite radial sides of the core cowl 248.

The gas turbine engine 210A also defines or includes an inlet duct 280. The inlet duct 280 extends between an engine inlet 282 and the core inlet 250 and fan duct inlet 276. The engine inlet 282 is defined generally at the forward end of the fan cowl 232 and is positioned between the fan 215 and the fan guide vane assembly 218 along the axial direction A. The inlet duct 280 is an annular duct that is positioned inward of the fan cowl 232 along the radial direction R. Air flowing downstream along the inlet duct 280 is split, not necessarily evenly, into the core duct 241 and the fan duct 272 by a fan duct splitter or leading edge 279 of the core cowl 248. In the embodiment depicted, the inlet duct 280 is wider than the core duct 241 along the radial direction R. The inlet duct 280 is also wider than the fan duct 272 along the radial direction R.

Notably, for the embodiment depicted, the engine 210A includes one or more features to increase an efficiency of a third stream thrust, Fn_{3S} (e.g., a thrust generated by an airflow through the fan duct 272 exiting through the fan exhaust nozzle 278, generated at least in part by the ducted fan 284). In particular, the engine 210A further includes an array of inlet guide vanes 286 positioned in the inlet duct 280 upstream of the ducted fan 284 and downstream of the core inlet 250. The array of inlet guide vanes 286 are arranged around the longitudinal axis 214. For this embodiment, the inlet guide vanes 286 are not rotatable about the longitudinal axis 214. Each inlet guide vane 286 defines a central blade axis (not labeled for clarity), and is rotatable about its respective central blade axis, e.g., in unison with one another. In such a manner, the inlet guide vanes 286 may be considered a variable geometry component. One or more actuators 288 are provided to facilitate such rotation and therefore may be used to change a pitch of the inlet guide vanes 286 about their respective central blade axes. However, in other embodiments, each inlet guide vane 286 may be fixed or unable to be pitched about its central blade axis.

Further, located downstream of the ducted fan 284 and upstream of the fan duct inlet 276, the gas turbine engine 210A includes an array of outlet guide vanes 290. As with the array of inlet guide vanes 286, the array of outlet guide vanes 290 are not rotatable about the longitudinal axis 214. However, for the embodiment depicted, unlike the array of inlet guide vanes 286, the array of outlet guide vanes 290 are configured as fixed-pitch outlet guide vanes.

Further, it will be appreciated that for the embodiment depicted, the fan exhaust nozzle 278 of the fan duct 272 is further configured as a variable geometry exhaust nozzle 278. In such a manner, the engine 210A includes one or more actuators 292 for modulating the variable geometry exhaust nozzle 278. For example, the variable geometry exhaust nozzle 278 may be configured to vary a total cross-sectional area (e.g., an area of the nozzle in a plane perpendicular to the longitudinal axis 214) to modulate an amount of thrust generated based on one or more engine operating conditions (e.g., temperature, pressure, mass flowrate, etc. of an airflow through the fan duct 272). A fixed geometry exhaust nozzle may also be adopted.

Moreover, referring still to FIG. 2, in exemplary embodiments, air passing through the fan duct 272 may be relatively cooler (e.g., lower temperature) than one or more fluids utilized in the turbomachine 230. In this way, one or more heat exchangers 291 may be positioned in thermal communication with the fan duct 272. For example, one or more heat exchangers 291 may be disposed within the fan duct 272 and utilized to cool one or more fluids from the core engine with the air passing through the fan duct 272, as a resource for removing heat from a fluid, e.g., compressor bleed air, oil or fuel.

Referring still to FIG. 2, as noted, the first propulsor 200A includes electric machine 300A operably coupled with a rotating component thereof. In this regard, the first propulsor 200A is an aeronautical hybrid-electric propulsion machine. Particularly, as shown in FIG. 2, the electric machine 300A is mechanically coupled with the low speed spool 255 of the gas turbine engine 210A, and more particularly, the low pressure shaft 246 of the low speed spool 255. As depicted, the electric machine 300A is embedded within the core of the gas turbine engine 210A. Specifically, the electric machine 300A is positioned inward of the core duct 241 along the radial direction R. Moreover, for this embodiment, the electric machine 300A is positioned generally at the aft end of the gas turbine engine 210A and is at least partially overlapping with or aft of the low pressure turbine 242 along the axial direction A.

However, in other exemplary embodiments, the electric machine 300A may be positioned at other suitable locations within the gas turbine engine 210A. For instance, in some embodiments, the electric machine 300A can be coupled with the low speed spool 255 in other suitable locations. For instance, in some embodiments, the electric machine 300A can be positioned forward of the low pressure compressor 244 along the axial direction A and inward of the turbomachinery flowpath 254 along the radial direction R. Further, as shown in FIG. 2, the electric machine 300A mechanically coupled with the low pressure shaft 246 is electrically coupled with the power bus 184.

In addition or alternatively to the gas turbine engine 210A having electric machine 300A coupled to the low speed spool 255, in the embodiment depicted, the gas turbine engine 210A further includes an electric machine 302A mechanically coupled with the high speed spool 253 of the gas turbine engine 210A, and more particularly, the high speed shaft 238 of the high speed spool 253. As depicted in FIG. 2, the electric machine 302A is mechanically coupled with the high speed shaft 238 through a mechanical linkage. The electric machine 302A is positioned outward of the core duct 241 along the radial direction R and is positioned forward of the combustion section of the gas turbine engine 210A along the axial direction A.

However, in other exemplary embodiments, the electric machine 302A may be positioned at other suitable locations within the gas turbine engine 210A (e.g., inward of the core duct 241 along the radial direction R).

Like the electric machine 300A mechanically coupled with the low speed spool 255, the electric machine 302A mechanically coupled with the high speed spool 253 can be an electric motor operable to drive or motor the high speed shaft 238, e.g., during a starting operation of the gas turbine engine 210A. In other embodiments, the electric machine 302A can be an electric generator operable to convert mechanical energy into electrical energy. In this way, electrical power generated by the electric machine 302A can be directed to various engine and/or aircraft systems. In some embodiments, the electric machine 302A can be a motor/generator with dual functionality.

Further, as shown in FIG. 2, the electric machine 302A mechanically coupled with the high speed shaft 238 is also electrically coupled with the power bus 184. More specifically, the aeronautical power system may include a power electronics assembly 188 located between the electric machines 300A, 302A and the power bus 184. The power electronics assembly 188 may comprise one or more power inverters, power controllers, or other types of electronic components in electric connection with one or more electric power loads, electric power sources, or both (e.g., of the engine or the aircraft, or both).

Additionally or alternatively, in other exemplary embodiments, any other suitable gas turbine engine may be provided. For example, in other exemplary embodiments, the gas turbine engine may be a turboshaft engine, a turboprop engine, turbojet engine, etc. Moreover, for example, although the engine is depicted as a single unducted rotor engine, in other embodiments, the engine may include a multi-stage open rotor configuration, and aspects of the disclosure described hereinbelow may be incorporated therein.

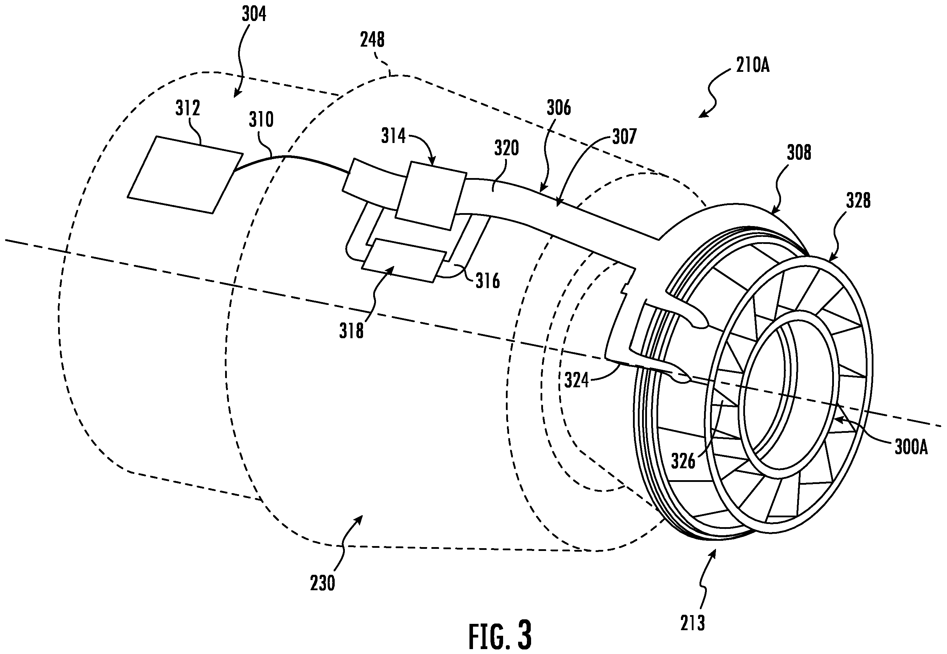

Referring to FIG. 3, a perspective view of a portion of the gas turbine engine 210A is illustrated diagrammatically and generally describes an electrical system 304 and a portion of a thermal management system 306. The electrical system 304 includes the electrical machine 300A disposed in the aft end 213 of the gas turbine engine 210A. The electrical machine 300A converts mechanical energy (e.g., generated from exhaust gases generated in the turbomachine 230 (FIG. 2) produced by the gas turbine engine 210A into electrical energy that may be used to power electrical devices of the gas turbine engine 210A or components disposed elsewhere on an aircraft incorporating the gas turbine engine 210A.

The electrical system 304 includes a connection assembly 308 that is routed through the thermal management system 306. The connection assembly 308 includes a plurality of electrical connectors 310 (e.g., power cables) that conductively connect the electrical machine 300A to a power converter 312. For example, the electrical machine 300A may generate an alternating current ("AC") power signal from mechanical energy in the spinning low pressure shaft 246 (FIG. 2), which electrical power is routed to the power converter 312 (located in the forward part of the engine) via the connection assembly 308. The power converter 312 may generate a DC voltage from the AC power signal for communication to alternative locations on the aircraft (e.g., via an electrical communications bus). The structure of the power converter 312 and connection assembly 308 may vary depending, at least in part, on the structure and capabilities of the electrical machine 300A. For example, in various embodiments, the electrical machine 300A may generate an AC power signal having any number of phases (e.g., one phase, two phases, three phases, four phases, etc.).

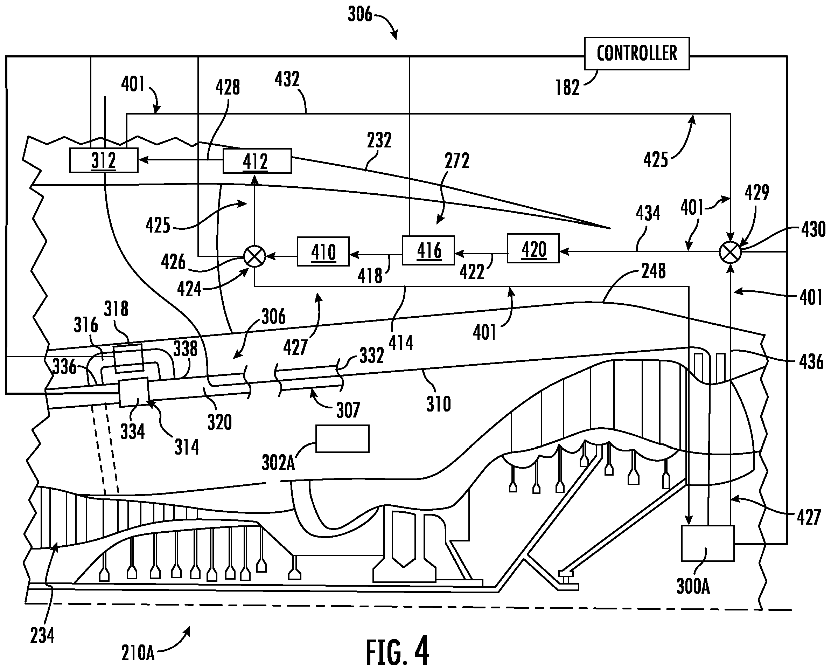

The thermal management system 306 defines a thermal management system flowpath 307 that routes cooling air from an air source to the electrical machine 300A to cool the electrical machine 300A because the electrical machine 300A may be disposed proximate to relatively high temperature exhaust generated via the turbomachine 230. The thermal management system 306 may include a valve assembly 314 defining, in part, the thermal management system flowpath 307 in fluid communication with the air source (see also FIG. 4). **In** exemplary embodiments, the valve assembly 314 may be controlled by a controller (e.g., a full authority digital engine control, or FADEC, controller) or it may be initiated for a pre-set period of time during or after engine shutdown. A blower may alternatively be operated for a period of time, based on a temperature sensor in proximity to the electrical machine 302A or elsewhere within the turbomachine 230. Upon initiating the blower (during or after shutdown) the valve assembly 314 is opened and cooling air drawn into the thermal management system 306. The thermal management system 306 may further include a bypass duct 316 defining, in part, the thermal management system flowpath 307 that can be used to bypass the valve assembly 314. A blower assembly 318 may be controlled via the controller to operate during time periods when the valve assembly 314 is closed. Cooling air may be provided to the electrical machine 302A using the bypass duct 316 and the blower assembly 318 irrespective of a state of operation of the gas turbine engine 210A. The blower assembly 318 may be powered by an aircraft or another power source dedicated for use by the blower assembly 318.

The thermal management system flowpath 307 may include a plurality of different ducts having structures extending in different directions at various positions within the gas turbine engine 310A. As depicted, the thermal management system flowpath 307 includes a main duct 320, a circumferential duct 322, and a plurality of generator cooling ducts 324 that may or may not continue through struts 326. The main duct 320, the circumferential duct 322, and the plurality of generator cooling ducts 324 may be designed to provide adequate space for routing the connection assembly 308 to the electrical machine 300A while reducing impacts on aerodynamic performance of the gas turbine engine 210A.

The valve assembly 314 controls airflow through the main duct 320. The main duct 320 directs the cooling air towards the aft end 213 where the electrical machine 302A is located. The circumferential duct 322 divides the cooling air into circumferential portions and directs the cooling air in a circumferential direction around a turbine rear frame 328. In exemplary embodiments, the plurality of generator cooling ducts 324 divide each circumferential portion of the cooling air into cooling portions that are provided to the electrical machine 300A via struts 326 of the turbine rear frame 328. In some embodiments, the thermal management system 306 includes four generator cooling ducts 324 that provide cooling air to the electrical machine 300A via four separate struts 326 of the turbine rear frame 328. It should be noted that any suitable existing structures of the gas turbine engine 310A may be made into cooling ducts configured to direct cooling air to a desired location. In exemplary embodiments, the generator cooling ducts 324 extend through the struts 326 into a generator coupler in fluid communication with the electrical machine 302A to cool the electrical machine 300A.

Referring to FIG. 4, as discussed above, the gas turbine engine 210A includes the thermal management system 306 that is used to remove heat from the electrical machine 60. The thermal management system 306 includes the valve assembly 314 that controls the flow of cooling air from the air source, such as from the compressor section, the fan section, or both, of the gas turbine engine 310A.

In the illustrated example, the main duct 78 receives cooling air from an upstream location of the gas turbine engine 310A. The thermal management system 306 includes the main duct 320 having one or more inlets, represented by element 330. The main duct 320 further has an outlet, represented by element 332, that is in fluid communication with the circumferential duct 322 that is in fluid communication with the plurality of the generator cooling ducts 324 (FIG. 3).

The valve assembly 314 may be incorporated within the main duct 320 and includes one or more valves operable to control airflow through the main duct 320. As one example, the valve assembly 314 may include a valve 334 that may be a controllable valve that includes a flow control element movable between open and closed configurations. In the open configuration, airflow through the main duct 320 is permitted by the flow control element and, in the closed configuration, airflow through the main duct 320 is inhibited by the flow control element. In some embodiments, the valve 334 may have a variable intermediate configuration that allows for adjustment of the air flow to a selected airflow rate between predetermined minimum and maximum flowrates. As an example, the valve 334 may allow passage of up to about 100 percent of a total flow rate of cooling air through the main duct 320 during normal engine operation, such as up to about 70 percent, such as up to about 50 percent, such as up to about 25 percent, such as up to about 10 percent, such as between about 10 percent and about 90 percent, such as between about 30 percent and about 70 percent.

The bypass duct 316 may have an inlet 336 that is fluidly connected to the main duct 320 at a location that is upstream of the valve assembly 314. The bypass duct 316 may have an outlet 338 that is fluidly connected to the main duct 320 at a location that is downstream of the valve assembly 314. The inlet 336 and the outlet 338 of the bypass duct 316 may be on opposite sides of the valve assembly 314 such that cooling airflow can bypass the valve assembly 314 when the valve 334 is in the closed configuration.

The bypass duct 316 includes the blower assembly 318 between inlet 336 and the outlet 338. The blower assembly 318 may be any apparatus operable to blow, pump, or move a cooling airflow from the inlet 336 towards the outlet 338. A power source for operating the blower assembly 318 may be mechanical, hydraulic, pneumatic, or electrical. For example, a blower rotor may be coupled to an electric motor. In one example, the motor may be an AC induction motor or DC motor. The motor may utilize a power source provided by an airplane, or may utilize its own power source, for example, internal to the cooling blower assembly. Further, the blower assembly 318 may be sized to provide an adequate discharge pressure and flow rate for cooling of the electrical machine 300A, which can depend, at least in part, on the size of the gas turbine engine. Also, the speed of the blower assembly 318 may be controlled in order to change the air velocity automatically and/or in response to a user input.

In the illustrated embodiment, the thermal management system 306 is further defined by a thermal management system flowpath 401. The thermal management system flowpath 401 is a flowpath for a flow of a heat exchange fluid that flows to, through, or both, the components of the thermal management system 306. The heat exchange fluid can be of a suitable temperature for thermal energy transfer for a desired or particular function corresponding to the components of the thermal management system 306. In exemplary embodiments, the fluid comprises oil. However, it should be understood that the fluid flowing via the thermal management system flowpath 401 may comprise any suitable fluid for thermal energy transfer such as, by way of non-limiting examples, ethylene glycol, propylene glycol, a water-glycol mixture, Dow Corning's Syltherm^{™}, or Exxon Mobil's Coolanol^{™}.

The electric machine 300A is thermally connected to the thermal management system flowpath 401. As described above, the electric machine 300A may be rotatable with a first rotating component of an engine. For example, in certain exemplary embodiments, the electric machine 300A may be a LP electric machine rotatable with a low pressure spool of the engine (e.g., low speed spool 255 of engine 210A in FIG. 2).

Referring still to FIG. 4, the exemplary thermal management system 306 depicted further includes the power converter 312 electrically connected to the electric machine 300A. The power converter 312 is thermally connected to the thermal management system flowpath 401 and to the electric machine 300A. The power converter 312 may comprise the power electronics assembly 188 incorporated into one or more of the engines 210A, 210B, aircraft 100, or both (FIGS. 1 and 2). The power converter 312 may comprise one or more converters and one or more power controllers, and more specifically, one or more power distribution and monitoring units (referred to herein as a "PDMU"), in electric connection with the power converter 312, as well as with one or more electric power loads, electric power sources, or both (e.g., of the engine or the aircraft, or both). In such a manner, the one or more PDMUs may receive electric power from the power converter 312 and may distribute the electric power to one or more electric power loads of the engine and the aircraft, e.g., in response to one or more commands or other data inputs. Of course, in other embodiments, the directional flow of electric power may be reversed. It will be appreciated that the PDMUs may include a computing device(s) configured in substantially the same manner as the exemplary computing devices of the computing controller 182 described below with reference to FIG. 5. In such a manner, the PDMUs may be configured to receive one or more data inputs, and may make control decisions in response to the one or more data inputs (e.g., to provide electric power to one or more loads of the engine and/or the aircraft).

The exemplary thermal management system 306 depicted further includes a first heat exchanger 410 and a second heat exchanger 412. The first heat exchanger 410 is thermally connected to the thermal management system flowpath 401 and to the electric machine 300A. The second heat exchanger 412 is thermally connected to the thermal management system flowpath 401, the first heat exchanger 410, and the power converter 312. The first heat exchanger 410 and the second heat exchanger 412 may be located in the fan duct 272 (FIG. 2), such as the heat exchanger 291 (FIG. 2), exposed to overboard air, located in within the cowl 248 (FIG. 2), or elsewhere within the gas turbine engine 210A (FIGS. 1 and 2). The first heat exchanger 410 and the second heat exchanger 412 could be gas-gas, gas-liquid, liquid-liquid heat exchangers or thermoelectric devices. Heat sink fluid associated with the first heat exchanger 410 and the second heat exchanger 412 could be fuel, water, water from an aircraft lavatory system, refrigerant from an environmental control system of an aircraft, or other suitable thermal transfer fluid.

In the illustrated embodiment, the electric machine 300A is fluidly connected to the first heat exchanger 410 via a line 414, a flow splitter 424, and a line 415. Lines 414 and 415, and the flow splitter 424, define in part thermal management system flowpath 401. The flow splitter 424 fluidly connects the line 415 with the line 414. The flow splitter 424 is located downstream from the first heat exchanger 410 and upstream of the second heat exchanger 412 based on a flow direction of the fluid flowing through the thermal management system flowpath 401. The flow splitter 424 is operable to split or divide the flow of the fluid flowing through the thermal management system flowpath 401 such that the fluid output from the first heat exchanger 410 is split or divided by the flow splitter 424 into a first portion 425 that flows to the second heat exchanger 412 and a second portion 427 that flows to the electric machine 300A. In exemplary embodiments, the flow splitter 424 may comprise a standard Y-type, T-type of fitting or three-way fitting such that the flow splitter 424 is a passive flow splitter 424. As a passive flow splitter 424, normal operating pressure drops within the thermal management system flowpath 401 based on the components of the thermal management system 306 result in different volumes or portions of the fluid being divided between two different flowpaths. However, it should be understood that the flow splitter 424 may also comprise a flow control device 426 to actively regulate the flow of the fluid to the second heat exchanger 412 and the electric machine 300A. The flow control device 426 may comprise an electronically controlled valve or other type of device such that the flow of the fluid can be actively regulated based on, by way of non-limiting examples, power or thermal demand.

The first heat exchanger 410 is located downstream from a pump 416 via a line 418 based on a flow direction of the fluid flowing through the thermal management system flowpath 401. Line 418 defines in part thermal management system flowpath 401. The pump 416 is located downstream from a tank 420 via a line 422 based on a flow direction of the fluid flowing through the thermal management system flowpath 401. Line 422 defines in part thermal management system flowpath 401.

The second heat exchanger 412 is fluidly connected to the power converter 312 via a line 428. Line 428 defines in part thermal management system flowpath 401. The power converter 312 is located downstream from the second heat exchanger 412 based on a flow direction of the fluid flowing through the thermal management system flowpath 401. The power converter 312 is fluidly connected to a flow joiner 429 via a line 432. Line 432 and the flow joiner 429 define in part thermal management system flowpath 401. The flow joiner 429 fluidly connects the line 432 with a line 434 and a line 436. The lines 434 and 436 define in part thermal management system flowpath 401. The flow joiner 429 is located downstream from the power converter 312 and downstream of the electric machine 300A based on a flow direction of the fluid flowing through the thermal management system flowpath 401. The flow joiner 429 is operable to join, merge, or combine flows of the fluid flowing through the thermal management system flowpath 401 such that the fluid output from the power converter 312 (e.g., the portion 425) is joined or combined with fluid output from the electric machine 300A (e.g., the portion 427). The joined flows are output from the flow joiner 329 to the tank 420 via the line 434. In exemplary embodiments, the flow joiner 429 may comprise a standard Y-type or T-type of fitting or a three-way fitting such that the flow joiner 429 is a passive flow joiner 429. However, it should be understood that the flow joiner 429 may also comprise a flow control device 430 to actively regulate the combining of the fluid flows from the power converter 312 and the electric machine 300A. The flow control device 430 may comprise an electronically controlled valve or other type of device such that the flow of the fluid can be actively regulated based on, by way of non-limiting examples, power or thermal demand.

In operation, a heat exchange fluid flows downstream in the thermal management system flowpath 401 via line 422 from the tank 420 to the pump 416. The pump 416 pumps the heat exchange fluid to the first heat exchanger 410 via the line 418. In exemplary embodiments, the first heat exchanger 410 is an air-cooled heat exchanger. In exemplary embodiments, the heat exchange fluid flowing via the thermal management system flowpath 401 is oil. In such an embodiment, the first heat exchanger 410 may be an air-cooled oil cooler (ACOC). The heat exchange fluid flows downstream and is output from the first heat exchanger 410 to the line 415. The heat exchange fluid flows downstream in the thermal management system flowpath 401 via line 415 to the flow splitter 424. The flow splitter 424 separates, divides, or splits the flow into the first portion 425 flowing downstream in the thermal management system flowpath 401 to the second heat exchanger 412 and the second portion 427 flowing downstream in the thermal management system flowpath 401 to the electric machine 300A. In exemplary embodiments, the second heat exchanger 412 is a fuel-cooled heat exchanger. In exemplary embodiments, the heat exchange fluid is oil. In such an embodiment, the second heat exchanger 412 is a fuel-cooled oil cooler (FCOC).

The portion 425 of the heat exchange fluid flows downstream in the thermal management system flowpath 401 via line 428 from the second heat exchanger 412 to the power converter 312. The portion 425 of the heat exchange fluid flows downstream in the thermal management system flowpath 401 from the power converter 312 to the tank 420 via line 432, the flow joiner 429, and the line 434. The portion 427 of the heat exchange fluid flows downstream in the thermal management system flowpath 401 from the electric machine 300A to the tank 420 via line 436, the flow joiner 429, and the line 434.

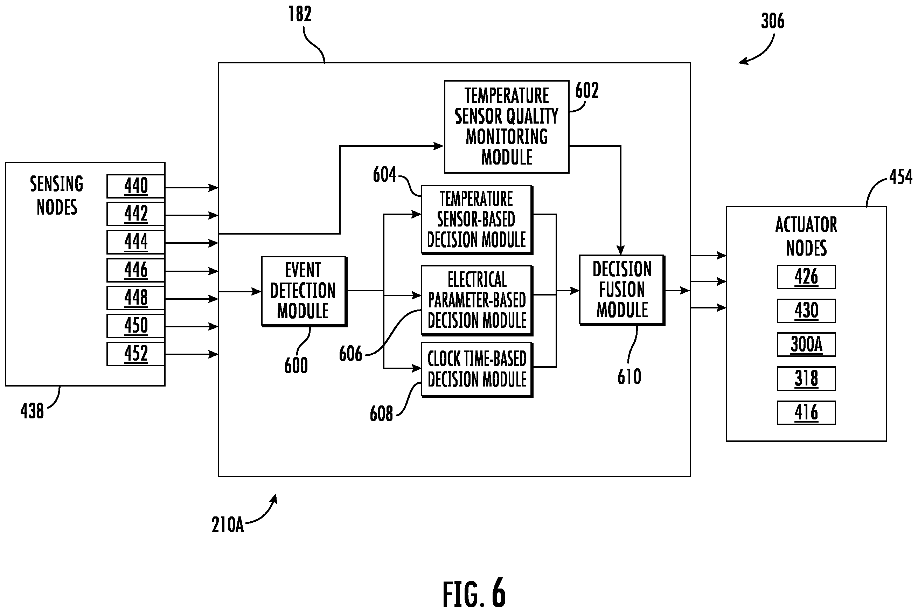

Referring now to FIGS. 5 and 6, operation of the thermal management system 306 in accordance with an exemplary embodiment of the present disclosure will be described. More specifically, FIGS. 5 and 6 provide schematic illustrations of the gas turbine engine 210A and the thermal management system 306 according to an embodiment of the present disclosure.

Briefly, it will be appreciated that the gas turbine engine 210A and the thermal management system 306 may include one or more sensing nodes 438 configured to sense data associated with various components or operating parameters or conditions associated with the gas turbine engine 210A, the thermal management system 306, or both. In the exemplary embodiment depicted, the sensing nodes 438 include a sensor 440 configured to sense data indicative of an operating parameter of the electric machine 300A, such as, by way of non-limiting example, a temperature of the stator coil insulation of the electric machine 300A. The sensing nodes 438 also include a sensor 442 configured to sense data indicative of another operating parameter of the electric machine 300A, such as, by way of non-limiting example, current levels at the U, V, and W output channels of the electric machine 300A, voltage levels at the U, V, and W output channels of the electric machine 300A, or any combination of the foregoing. The sensing nodes 438 further include a sensor 444 configured to sense data indicative of an operating parameter of the pump 416, such as, by way of non-limiting example, pump speed, heat exchange fluid pressure within the thermal management system flowpath 401, a temperature of the heat exchange fluid within the thermal management system flowpath 401, the flow rate of the heat exchange fluid within the thermal management system flowpath 401, or any combination of the foregoing. The sensing nodes 438 also include a sensor 446 configured to sense data indicative of an operating parameter of the blower assembly 318, such as, by way of non-limiting example, blower speed, the flow rate of the heat exchange fluid within the thermal management system flowpath 307, a temperature of the heat exchange fluid within the thermal management system flowpath 307, or any combination of the foregoing. The sensing nodes 438 also include a sensor 448 configured to sense data indicative of an operating parameter of the power converter 312, such as, by way of non-limiting example, a temperature of the power converter 312. The sensing nodes 438 also include a sensor 450 configured to sense data indicative of an ambient condition, such as, by way of non-limiting example, an ambient temperature of an internal or external air flow or the temperature of the environment in which the gas turbine engine 210 is operating. The sensing nodes 438 also include a sensor 452 configured to sense data indicative of an operating parameter of the turbomachine 230, such as, by way of non-limiting example, a load condition of the turbomachine 230.

In the illustrated embodiment, the exemplary thermal management system 306 includes the controller 182. The controller 182 is operably connected to various components, sensing nodes, valves, etc., within at least one of the gas turbine engine 210A and the thermal management system 306. More specifically, for the exemplary aspect depicted, the controller 182 is operably connected to the power converter 312, the electric machine 300A, the pump 416, the blower assembly 318, the valve 334, and the flow control devices 426 and 430. The controller 182 is also operably connected to the sensors 440,442, 444, 446, 448, 450, and 452. As will be appreciated from the description below, the controller 182 may be in wired or wireless communication with these components. In this manner, the controller 182 may receive data from a variety of inputs (including the sensors 440,442, 444, 446, 448, 450, and 452), may make control decisions, and may provide data (e.g., instructions) to a variety of input interfaces to various components of the gas turbine engine 210A and the thermal management system 306 (including the power converter 312, the electric machine 300A, the pump 416, the blower assembly 318, the valve 334, and the flow control device 426).

Referring particularly to the operation of the controller 182, in at least certain embodiments, the controller 182 can include one or more computing device(s) 500. The computing device(s) 500 can include one or more processor(s) 500A and one or more memory device(s) 500B. The one or more processor(s) 500A can include any suitable processing device, such as a microprocessor, microcontroller, integrated circuit, logic device, and/or other suitable processing device. The one or more memory device(s) 500B can include one or more computer-readable media, including, but not limited to, non-transitory computer-readable media, RAM, ROM, hard drives, flash drives, and/or other memory devices.

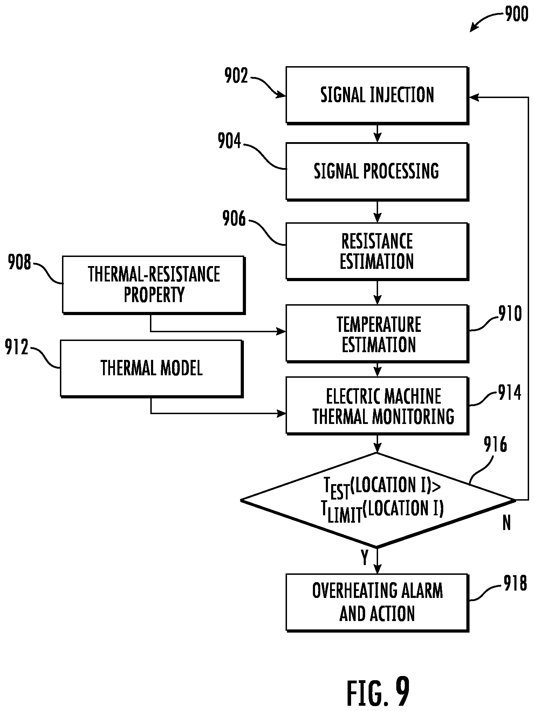

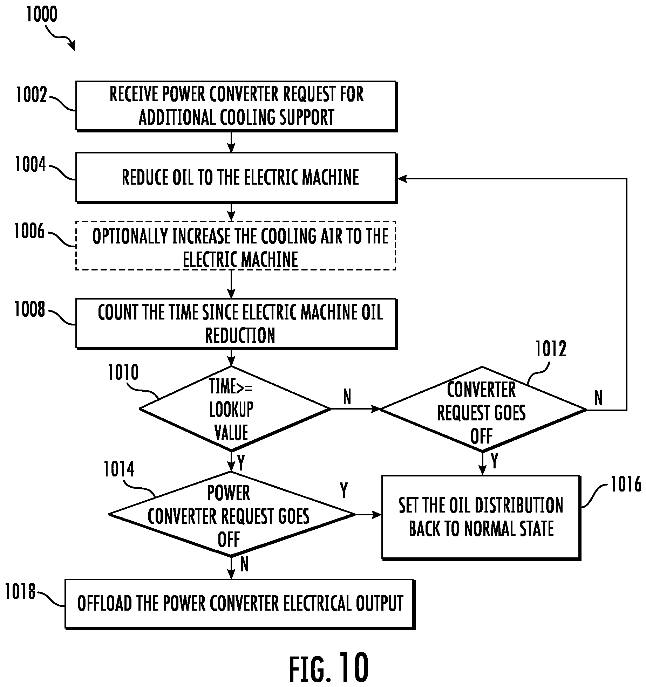

The one or more memory device(s) 500B can store information accessible by the one or more processor(s) 500A, including computer-readable instructions 500C that can be executed by the one or more processor(s) 500A. The instructions 500C can be any set of instructions that when executed by the one or more processor(s) 500A, cause the one or more processor(s) 500A to perform operations. In some embodiments, the instructions 500C can be executed by the one or more processor(s) 500A to cause the one or more processor(s) 500A to perform operations, such as any of the operations and functions for which the controller 182 and/or the computing device(s) 500 are configured, the operations for operating a propulsion system (e.g., methods 900 and 1000 described below in connection with respective FIGS. 9 and 10), as described herein, and/or any other operations or functions of the one or more computing device(s) 500. The instructions 500C can be software written in any suitable programming language or can be implemented in hardware. Additionally, and/or alternatively, the instructions 500C can be executed in logically and/or virtually separate threads on processor(s) 500A. The memory device(s) 500B can further store data 500D that can be accessed by the processor(s) 500A. For example, the data 500D can include models, lookup tables, databases, etc.

The computing device(s) 500 also includes a network interface 500E configured to communicate, for example, with the other components of the gas turbine engine 210A and the thermal management system 306 (such as the power converter 312, the electric machine 300A, the pump 416, the blower assembly 318, the valve 334, the flow control devices 426 and 430, the sensors 440,442, 444, 446, 448, 450, and 452, etc.). The network interface 500E can include any suitable components for interfacing with one or more network(s), including for example, transmitters, receivers, ports, controllers, antennas, and/or other suitable components. In such a manner, it will be appreciated that the network interface 500E may utilize any suitable combination of wired and wireless communications network(s).

The technology discussed herein makes reference to computer-based systems and actions taken by and information sent to and from computer-based systems. It will be appreciated that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Referring specifically to FIG. 6, the controller 182 receives inputs from one or more of the sensing nodes 438 and performs one or more mitigating actions at one or more actuator nodes 454 based on an analysis of the received inputs from the one or more sensing nodes 438. The one or more actuator nodes 454 may include, by way of non-limiting example, the flow control devices 426 and 430, the electric machine 300A, the blower assembly 318, and the pump 416. In the illustrated embodiment, the controller 182 includes an event detection module 600, a temperature sensor quality monitoring module 602, a temperature sensor-based decision module 604, an electrical parameter-based decision module 606, a clock time-based decision module 608, and a decision fusion module 610. The event detection module 600, the temperature sensor quality monitoring module 602, the temperature sensor-based decision module 604, the electrical parameter-based decision module 606, the clock time-based decision module 608, and the decision fusion module 610 may each comprise instructions 500C (FIG. 5) executable by the one or more processors 500A (FIG. 5) to analyze the inputs from the one or more sensing nodes 438 and issue one or more commands to perform one or more mitigating actions or operations associated with the gas turbine engine 210A and the thermal management system 306.

In exemplary embodiments, the event detection module 600 analyzes one or more signals from one or more of the sensing nodes 438 to determine or detect a thermal anomaly with at least one of the gas turbine engine 210A and the thermal management system 306. A "thermal anomaly" may be a deviation from standard operating characteristics based on a context of a monitored object, the thermal data of the monitored object, and thermal parameters corresponding to the monitored object, or any combination of the foregoing. For example, the detection module 600 may detect a thermal anomaly based on a rate of change of an operating parameter, or a deviation from an expected or normal rate of change of an operating parameter, with respect to predefined thresholds. The predefined thresholds may be stored in the memory 500B as data 500D (FIG. 5). In exemplary embodiments, the detection module 600 may detect a thermal anomaly based on, by way of non-limiting examples: a cooling air blower pressure drop associated with the blower assembly 318 (FIG. 5) based on a signal from the sensor 446 indicating a pressure drop exceeding a known or expected value; a significant drop in a pressure or flow rate of the heat exchange fluid corresponding to the thermal management system flowpath 401 based on the sensor 444 detecting a pressure or flow rate below normal or expected values; based on a normalized stator coil temperature relationship between the electric machine 300A for the gas turbine engine 210A and the electric machine 300A for the gas turbine engine 210B (FIG. 1) outside or exceeding normal or expected values; based on a temperature of the electric machine 300A (e.g., a stator coil insulation temperature) based on the sensor 440 detecting a value being outside normal or expected values; or based on a lack of a temperature reading, or an abnormal temperature reading (e.g., exceedingly high or low based on normal or expected values) of the electric machine 300A (e.g., a stator coil insulation temperature) based on the sensor 440. One or more of the foregoing indications may indicate a loss of cooling to the electric machine 300A or a loss of monitoring information corresponding to the electric machine 300A.

In response to the detection module 600 detecting a thermal anomaly, in exemplary embodiments, at least one of the temperature sensor-based decision module 604, the electrical parameter-based decision module 606, and the clock time-based decision module 608 is used to analyze the thermal anomaly and identify or determine a mitigating action corresponding to the detected thermal anomaly. For example, in exemplary embodiments, the temperature sensor-based decision module 604 may access and evaluate a look-up table (e.g., stored in the memory 500B as data 500D (FIG. 5)) based on a temperature indicated by the sensor 440 to determine whether to derate the electric machine 300A (i.e., that the output or operating parameters of the electric machine 300A are reduced below a rated output or operating parameter) or uncouple the electric machine 300A from a downstream load. In exemplary embodiments, the electrical parameter-based decision module 606 may evaluate a transient model (e.g., stored in the memory 500B as data 500D (FIG. 5)) based on electrical parameter values indicated by the sensor 442 (e.g., current levels at the U, V, and W output channels of the electric machine 300A, voltage levels at the U, V, and W output channels of the electric machine 300A) to determine whether the electric machine 300A needs to be derated immediately or a time period after which the electric machine 300A should be derated. The clock time-based decision module 608 may evaluate a predefined transient transfer function model (e.g., stored in the memory 500B as data 500D (FIG. 5)) to determine a time period for executing a mitigation action based on one or more values received from the sensing nodes 438. For example, a predefined transient transfer function model may indicate that a hotspot associated with a component of the gas turbine engine 210A and the thermal management system 306 (by way of non-limiting example, the power converter 312 or a component of the electric machine 300A) may only reach its maximum design limit (e.g., 250° C) in 100 seconds based on offline testing. Based on the predefined transient transfer function model, the controller 182 may monitor the time period and execute a mitigating action upon expiration of the time period. For example, in the case of the electric machine 300A, the clock time-based decision module 608 may indicate a time period for derating the electric machine 300A, and the controller 182 may derate the electric machine 300A upon expiration of the time period.

The temperature sensor quality monitoring module 602 may monitor the condition of temperature sensors of the sensing nodes 438 and identify mitigating actions based on a quality assessment of such temperature sensors. For example, the temperature sensor quality monitoring module 602 may evaluate readings received from the sensors 440 and 448 to determine whether such readings are abnormal based on anticipated or historical temperature readings for the respective electric machine 300A and power converter 312. The temperature sensor quality monitoring module 602 may assess or evaluate, by way of non-limiting examples, a deviation from a temperature model or historical temperature data, a deviation from an electrical parameter model such as a pre-established function with a measured electrical resistance of copper or coils of the electric machine 300A, or a deviation from a temperature sensor on the same electric machine at another or different gas turbine engine. The temperature sensor quality monitoring module 602 may also assess whether there has been a loss of a temperature reading or if there is a non-responsive sensor (e.g., due to a faulty sensor 440 or 448). Based on a quality assessment of temperature sensor values, or a lack of values received from one or more of the temperature sensors 440 or 448, the temperature sensor quality monitoring module 602 may identify a mitigating action. In exemplary embodiments, the temperature sensor quality monitoring module 602 may evaluate a predefined transient transfer function model (e.g., stored in the memory 500B as data 500D (FIG. 5)) to identify a mitigating action. For example, in the event of a faulty sensor 440 corresponding to a temperature value of the electric machine 300A or an abnormal value received from the sensor 440, the temperature sensor quality monitoring module 602 may determine a time period for taking a mitigating action, and the controller 182 may take such mitigating action upon expiration of the time period, such as, by way of non-limiting example, derate the electric machine 300A.

The decision fusion module 610 fuses the decisions from the temperature sensor-based decision module 604, the electrical parameter-based decision module 606, and the clock time-based decision module 608. For example, the decision fusion module 610 may assess the determinations from the temperature sensor-based decision module 604, the electrical parameter-based decision module 606, and the clock time-based decision module 608 to determine if or when a mitigation action should be executed. In exemplary embodiments, the decision fusion module 610 may identify a mitigating action or cause a mitigating action to be executed based on indications received from only one, at least two, or all three of the temperature sensor-based decision module 604, the electrical parameter-based decision module 606, and the clock time-based decision module 608. In exemplary embodiments, the decision fusion module 610 may prioritize a mitigating action based on which of the temperature sensor-based decision module 604, the electrical parameter-based decision module 606, and the clock time-based decision module 608 indicated the mitigating action. In exemplary embodiments, the decision fusion module 610 may select a clock time-based indication from the clock time-based decision module 608 only when there is an indication of an abnormal sensor signal, or loss of a sensor signal, indicated by the temperature sensor quality monitoring module 602.

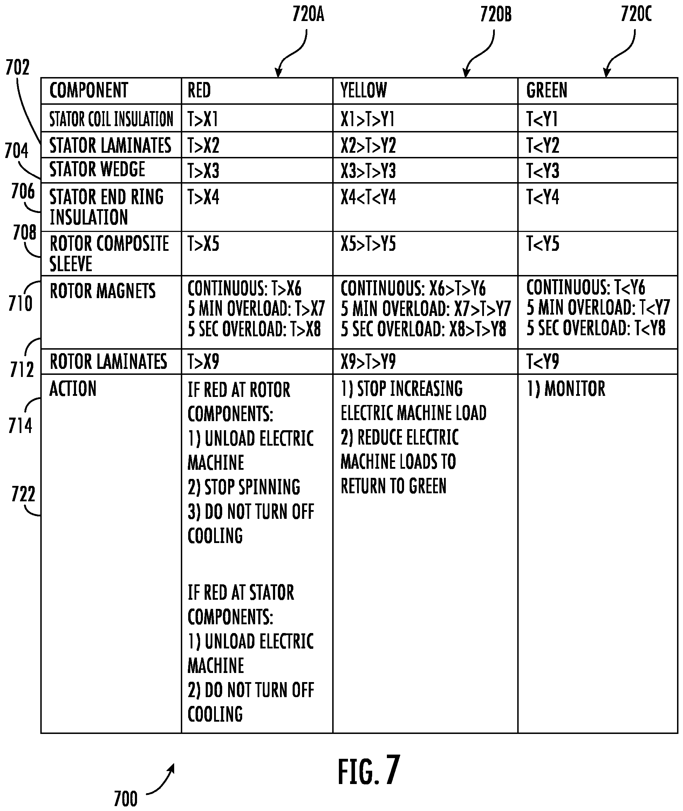

Referring to FIG. 7, an exemplary look-up table 700 is depicted that may be accessed and used by one or more of the event detection module 600, the temperature sensor quality monitoring module 602, the temperature sensor-based decision module 604, the electrical parameter-based decision module 606, the clock time-based decision module 608, and the decision fusion module 610 depicted in FIG. 6. The look-up table 700 may be stored in the memory 500B as data 500D (FIG. 5).

In the depicted exemplary look-up table 700, components corresponding to the electric machine 300A (FIGS. 1-5) are listed. However, it should be understood that additional look-up tables may be defined corresponding to other components of the gas turbine engine 210A (or another gas turbine engine) and the thermal management system 306.

In the depicted look-up table, the listed components of the electric machine 300A (FIGS. 1-5) include stator coil insulation 702, stator laminates 704, stator wedge 706, stator end ring insulation 708, rotor composite sleeve 710, rotor magnets 712, and rotor laminates 714. One or more of the sensing nodes 438 (FIG. 6) such as, by way of non-limiting example, one or more sensors 440, may be configured to sense or detect temperature readings or values corresponding to the electric machine 300A (FIGS. 1-5) components listed in the look-up table 700. The look-up table 700 also defines a number of classification zones based on a temperature reading for the corresponding component, indicated in FIG. 7 as a red zone 720A, a yellow zone 720B, and a green zone 720C. In the exemplary look-up table 700, temperature values are defined as X1-X9 and Y1-Y9 and may be defined having different values based on the particular components listed in the look-up table 700. The designations X1-X9 and Y1-Y9 are not intended to indicate particular temperature values.

The look-up table 700 also defines one or more mitigating actions 722 based on the temperature values detected for the corresponding components and whether such temperature values indicate a red zone 720A action, a yellow zone 720B action, or a green zone 720C action. For example, if a temperature value for the stator coil insulation 702 is greater than the temperature value X1, indicating a red zone 720A classification, the corresponding mitigating action 722 is to unload the electric machine 300A (FIGS. 1-5), stop spinning the electric machine 300A (FIGS. 1-5), and do not turn off or cease cooling to the electric machine 300A (FIGS. 1-5). Thus, in operation, the look-up table 700 may be accessed and used by one or more of the event detection module 600, the temperature sensor quality monitoring module 602, the temperature sensor-based decision module 604, the electrical parameter-based decision module 606, and the clock time-based decision module 608 to identify a mitigating action 722 based on temperature values or readings collected by the sensing nodes 438 (FIG. 6), and the decision fusion module 610 may issue one or more commands corresponding to the indicated mitigating actions 722.

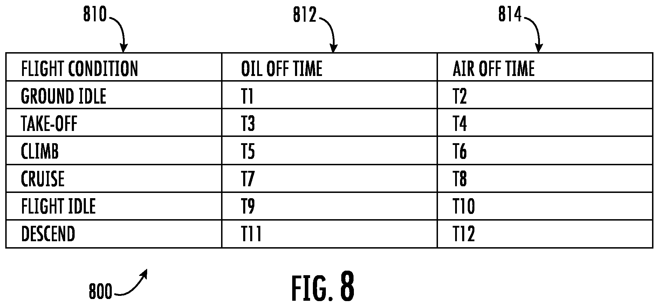

Referring to FIG. 8, an exemplary look-up table 800 is depicted that may be accessed and utilized by the controller 182 (FIGS. 5 and 6) to perform one or more dynamic cooling operations associated with the gas turbine engine 210A or the thermal management system 306 (FIGS. 1-6). The look-up table 800 may be stored in the memory 500B as data 500D (FIGS. 5 and 6).

In exemplary embodiments, the thermal management system 306 may be controlled by the controller 182 (FIGS. 5 and 6) to turn off or offload cooling air or cooling oil via the respective thermal management system flowpaths 307 and 401 to the electric machine 300A (FIGS. 1-6) such as, by way of non-limiting example, to increase cooling load to address an overheating condition with the power converter 312 (FIGS. 3-5) or during a blower assembly 318 (FIGS. 3-5) restart or test.

In the depicted look-up table 800, various flight conditions 810 are depicted. An oil off time 812 and an air off time 814 may be defined for each flight condition 810. The oil off time 812 may represent an amount of time that the heat exchange fluid, oil in this example, may be turned off, such as via the flow control device 426 (FIG. 5), to the electric machine 300A (FIGS. 1-6) without leading to an overheating condition of the electric machine 300A (FIGS. 1-6) at a certain flight condition. The air off time 814 may represent a similar definition for an amount of time that the heat exchange fluid, air in this example, may be turned off, such as via the blower assembly 318 (FIG. 5), to the electric machine 300A (FIGS. 1-6) without leading to overheating condition of the electric machine 300A (FIGS. 1-6) at a certain flight condition. In the look-up table 800, the designations T1-T12 represent different time period values. The designations T1-T12 are not intended to indicate particular time period values.

Referring to FIG. 9, a block diagram depicting a method 900 for thermal management of a hybrid electric system is illustrated. The method 900 may be applicable to the gas turbine engine 210A (FIGS. 1-5) or any other gas turbine engine of the aircraft 100 (FIG 1). The method 900 begins at 902, where the controller 182 injects direct current (DC) or alternating current (Ac) Frequency signals through motor drives of the electric machine 300A by modifying at least one electromagnetic signal command, such as current, voltage, torque, flux linkage, etc. At 904, the controller 182 performs signal processing by collecting at least one electrical signal from the electric machine 300A, such as, by way of non-limiting example, current, voltage, and pulse width modulation (PWM) duty cycles at a given time period and extracting the relevant DC or AC components. At 906, the controller 182 estimates resistance from the collected electrical signatures collected at 904. At 908, the controller 182 accesses a thermal resistance model corresponding to the electric machine 300A which may be stored in the memory 500B as data 500D (FIG. 5). At 910, the controller 182 uses the estimated thermal-resistance properties determined at 906 with the thermal resistance model accessed at 908 to estimate the corresponding temperature or thermal condition of the electric machine 300A.

At 912, the controller 182 accesses a thermal model corresponding to the electric machine 300A which may be stored in the memory 500B as data 500D (FIG. 5). At 914, the controller 182 performs thermal monitoring of the electric machine 300A by combining the thermal model of the electric machine 300A accessed at 912 with the estimated temperature of the electric machine 300A derived at 910. At 916, the controller 182 makes a determination of whether the estimated temperature derived at 910 is greater than a temperature limit for the electric machine 300A, such as based on the thermal model accessed at 912, for a particular location of the electric machine 300A. If not, the method returns to 902. If the determination at 916 is positive, then the method proceeds to 918, where the controller 182 may issue an overheating alarm and take a mitigating action. Such mitigating action may be to command the electric machine 300A to derate or shut down.

Referring to FIG. 10, a block diagram depicting another method 1000 for thermal management of a hybrid electric system is illustrated. The method 1000 may be applicable to the gas turbine engine 210A (FIGS. 1-5) or any other gas turbine engine of the aircraft 100 (FIG 1). The method 1000 begins at 1002, where the controller 182 receives a request or determines that additional cooling support is needed for the power converter 312. Such request or determination may be based on one or more signals received by the controller 182 from one or more of the sensing nodes 438 (FIGS. 5 and 6). At 1004, the controller 182 reduces a flow of heat exchange fluid, such as oil in this example, to the electric machine 300A via actuation or control of the flow control device 426 (FIG. 4) or the pump 416 (FIG. 4). At 1006, the controller 182 optionally increases the flow of a heat exchange fluid, such as air in this example, to the electric machine 300A via the blower assembly 318 (FIG. 4) or the bypass valve assembly 314. At 1008, the controller 182 measures or counts a time period since the flow of the heat exchange fluid to the electric machine 300A has been reduced.

At 1010, the controller 182 may access a look-up table, such as the look-up table 800 (FIG. 8), to determine an amount of time for a particular flight condition that the flow of the heat exchange fluid to the electric machine 300A can be reduced or ceased before an overheating condition may occur with respect to the electric machine 300A. If the amount of time that has elapsed since the reduced cooling condition for the electric machine 300A has not exceeded the time period indicated by the look-up table, the method proceed to 1012, where a determination is made by the controller 182 whether continued additional cooling support for the power converter 312 is no longer needed. If the determination is negative at 1012, the method returns to 1004. If the determination is positive at 1012, the method proceeds from 1012 to 1016, where the controller 182 may return the distribution of the heat exchange fluids to the power converter 312 and the electric machine 300A to an original or nominal state.

If at 1010 the amount of time that has elapsed since the reduced cooling condition for the electric machine 300A has exceeded the time period indicated by the look-up table, the method proceeds from 1010 to 1014, where a determination is made by the controller 182 whether continued additional cooling support for the power converter 312 is no longer needed. If the determination is positive at 1014, the method proceeds from 1014 to 1016, where the controller 182 may return the distribution of the heat exchange fluids to the power converter 312 and the electric machine 300A to an original or nominal state. If the determination is negative at 1014, the method proceeds from 1014 to 1018, where the controller 182 may cause an offload of the electrical output by the power converter 312.

Thus, according to exemplary embodiments of the present disclosure, the controller 182 is configured to extract or calculate a thermal signature to determine the health status of the electric machine 300A and the thermal management system 306 based at least on one or more of thermal sensors, electrical sensors, and residuals between redundant sensors. The controller 182 issues commands or otherwise controls various components of the thermal management system 306 to remedy or take mitigating actions in response to various thermal events, anomalies, or conditions. The actions taken by the controller 182 may be a dynamic or delayed thermal derating of the electric machine 300A based on an estimated temperature when a temperature sensor fails. The controller 182 may also initiate active thermal mitigation or management schemes with respect to the thermal management system flowpaths 307 and 401 such as, by way of non-limiting examples, heat exchange fluid temperatures, heat exchange fluid flow rates, and use of bypass air flow. The controller 182 may also turn off or reduce cooling to the electric machine 300A for a certain time period to alleviate an overheating condition of the power converter 312, increase or decrease air cooling during oil cooling adjustments, increase or decrease oil cooling during air cooling adjustments, or adjust cooling settings depending on the ambient flight conditions and load conditions. For example, the controller 182 may reduce cooling to the power converter 312 to avoid excessive cooling of the power converter 312 especially for light load conditions in cold ambient modes, such as in descent. The controller 182 may also take preconditioning actions such as adjusting or redirecting cooling to the power converter 312 or the electric machine 300A for anticipated or predicted events, such as take-off or large load events, to minimize temperature excursions and thermal cycling of components.

In exemplary embodiments, the controller 182 may also change a modulation method of the power converter 312 to reduce the loss in the power converter 312 bridge. As described above, the controller 182 can estimate the rotor temperature of the electric machine 300A using voltage or current measurements corresponding to the electric machine 300A.

Further aspects are provided by the subject matter of the following clauses:
A hybrid-electric propulsion system comprising: a gas turbine engine comprising a high pressure system and a low pressure system; an electric machine coupled to one of the high pressure system or the low pressure system; a thermal management system defining one or more thermal management system flowpaths and operable to provide one or more heat exchange fluids to the electric machine through the respective one or more thermal management system flowpaths; one or more sensing nodes connected to at least one of the one or more thermal management system flowpaths or the electric machine; and a controller configured to: collect one or more signals from the one or more sensing nodes; analyze the one or more signals to detect a thermal anomaly corresponding to at least one of the electric machine or the thermal management system; and responsive to detecting the thermal anomaly, perform at least one of: adjust a flow of at least one heat exchange fluid of the one or more heat exchange fluids; or derate the electric machine.

The hybrid-electric propulsion system of the preceding clause, wherein the one or more signals comprise at least one of: a temperature value corresponding to a stator coil of the electric machine; or an electrical parameter corresponding to the electric machine.

The hybrid-electric propulsion system of any preceding clause, wherein the one or more thermal management system flowpaths comprise a first thermal management system flowpath and a second thermal management system flowpath, and wherein the controller is configured to, responsive to detecting the thermal anomaly corresponding to the first thermal management system flowpath, increase the flow of the at least one heat exchange fluid flowing via the second thermal management system flowpath.

The hybrid-electric propulsion system of any preceding clause, wherein a first sensing node of the one or more sensing nodes indicates a temperature value corresponding to the electric machine, and responsive to a non-responsive condition of the first sensing node, the controller is configured to derate the electric machine immediately or after a predetermined time period.

The hybrid-electric propulsion system of any preceding clause, wherein the controller is configured to determine a time period for the thermal anomaly to reach a maximum value, and wherein the controller is configured to derate the electric machine in response to an expiration of the time period.

The hybrid-electric propulsion system of any preceding clause, wherein a first sensing node of the one or more sensing nodes indicates a temperature value corresponding to the electric machine, and responsive to a non-responsive condition of the first sensing node, the controller is configured to estimate a thermal condition of the electric machine based on at least one electrical parameter of the electric machine.

The hybrid-electric propulsion system of any preceding clause, further comprising a power converter electrically connected to the electric machine, and wherein at least one sensing node of the one or more sensing nodes is connected to the power converter, and responsive to detecting the thermal anomaly corresponding to the power converter based on the at least one sensing node connected to the power converter, the controller is configured to adjust the flow of the at least one heat exchange fluid to the electric machine.

The hybrid-electric propulsion system of any preceding clause, wherein at least one sensing node of the one or more sensing nodes is configured to determine at least one of an ambient thermal condition or a load condition of the gas turbine engine, and wherein the controller is configured to adjust flow of the at least one heat exchange fluid to the electric machine based on at least one of the ambient condition or the load condition.

The hybrid-electric propulsion system of any preceding clause, wherein the controller is configured to precondition the thermal management system prior to a predicted occurrence of the ambient thermal condition or the load condition.

The hybrid-electric propulsion system of any preceding clause, wherein the controller is configured to inject one or more frequency signals to the electric machine to generate the one or more signals collected by the controller.

A method for thermal management for a hybrid-electric propulsion system of an aircraft, the hybrid-electric propulsion system comprising a gas turbine engine having a high pressure system, a low pressure system, and an electric machine coupled to one of the high pressure system or low pressure system, the method comprising: flowing one or more heat exchange fluids via a thermal management system defining one or more thermal management system flowpaths to the electric machine; collecting, by a controller, one or more signals from one or more sensing nodes connected to at least one of the one or more thermal management system flowpaths or the electric machine; analyzing, by the controller, the one or more signals to detect a thermal anomaly corresponding to at least one of the electric machine or the thermal management system; and responsive to detecting the thermal anomaly, performing, by the controller, at least one of: adjusting a flow of at least one heat exchange fluid of the one or more heat exchange fluids; or derating the electric machine.

The method of the preceding clause, further comprising, detecting, by the controller, the thermal anomaly based on at least one of: a temperature value corresponding to a stator coil of the electric machine; or an electrical parameter corresponding to the electric machine.

The method of any preceding clause, wherein the one or more thermal management system flowpaths comprise a first thermal management system flowpath and a second thermal management system flowpath, and wherein, responsive to detecting the thermal anomaly corresponding to the first thermal management system flowpath, increasing, by the controller, the flow of the at least one heat exchange fluid flowing via the second thermal management system flowpath.

The method of any preceding clause, wherein a first sensing node of the one or more sensing nodes indicates a temperature value corresponding to the electric machine, and responsive to a non-responsive condition of the first sensing node, derating, by the controller, the electric machine.

The method of any preceding clause, further comprising determining, by the controller, a time period for the thermal anomaly to reach a maximum value, and further comprising derating, by the controller, the electric machine in response to an expiration of the time period.

The method of any preceding clause, wherein a first sensing node of the one or more sensing nodes indicates a temperature value corresponding to the electric machine, and responsive to a non-responsive condition of the first sensing node, estimating, by the controller, a thermal condition of the electric machine based on at least one electrical parameter of the electric machine.

The method of any preceding clause, further comprising injecting, by the controller, one or more frequency signals to the electric machine to generate the one or more signals collected by the controller.

A non-transitory computer-readable medium comprising computer-executable instructions, which when executed by a processor associated with an electronic controller cause the electronic controller to perform a method for thermal management for a hybrid-electric propulsion system of an aircraft, the hybrid-electric propulsion system comprising a gas turbine engine having a high pressure system, a low pressure system, and an electric machine coupled to one of the high pressure system or low pressure system, the method comprising: flowing one or more heat exchange fluids via a thermal management system defining one or more thermal management system flowpaths to the electric machine, the electric machine operable to provide power to the gas turbine engine; collecting one or more signals from one or more sensing nodes connected to at least one of the one or more thermal management system flowpaths or the electric machine; analyzing the one or more signals to detect a thermal anomaly corresponding to at least one of the electric machine or the thermal management system; and responsive to detecting the thermal anomaly, performing at least one of: adjusting a flow of at least one heat exchange fluid of the one or more heat exchange fluids; or derating the electric machine.

The non-transitory computer-readable medium of the preceding clause, comprising further computer-executable instructions, which when executed by the processor, cause the electronic controller to further perform the method of detecting the thermal anomaly based on at least one of: a temperature value corresponding to a stator coil of the electric machine; or an electrical parameter corresponding to the electric machine.

The non-transitory computer-readable medium of any preceding clause, comprising further computer-executable instructions, which when executed by the processor, cause the electronic controller to further perform the method of injecting one or more frequency signals to the electric machine to generate the one or more signals collected by the electronic controller.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A hybrid-electric propulsion system (150) comprising:
a gas turbine engine (210A, 210B) comprising a high pressure system (234, 236, 238) and a low pressure system (242, 244, 246);
an electric machine (300A, 300B, 302A) coupled to one of the high pressure system (234, 236, 238) or the low pressure system (242, 244, 246);
a thermal management system (306) defining one or more thermal management system flowpaths (307, 401) and operable to provide one or more heat exchange fluids to the electric machine (300A, 300B, 302A) through the respective one or more thermal management system flowpaths (307, 401);
one or more sensing nodes (438) connected to at least one of the one or more thermal management system flowpaths (307, 401) or the electric machine (300A, 300B, 302A); and
a controller (182) configured to:
collect one or more signals from the one or more sensing nodes (438);
analyze the one or more signals to detect a thermal anomaly corresponding to at least one of the electric machine (300A, 300B, 302A) or the thermal management system (306); and
responsive to detecting the thermal anomaly, perform at least one of:
adjust a flow of at least one heat exchange fluid of the one or more heat exchange fluids; or
derate the electric machine (300A, 300B, 302A).

2. The hybrid-electric propulsion system (150) of claim 1, wherein the one or more signals comprise at least one of:
a temperature value corresponding to a stator coil of the electric machine (300A, 300B, 302A); or
an electrical parameter corresponding to the electric machine (300A, 300B, 302A).

3. The hybrid-electric propulsion system (150) of any preceding claim, wherein the one or more thermal management system flowpaths (307, 401) comprise a first thermal management system flowpath (307, 401) and a second thermal management system flowpath (307, 401), and wherein the controller (182) is configured to, responsive to detecting the thermal anomaly corresponding to the first thermal management system flowpath (307, 401), increase the flow of the at least one heat exchange fluid flowing via the second thermal management system flowpath (307, 401).

4. The hybrid-electric propulsion system (150) of any preceding claim, wherein a first sensing node (438) of the one or more sensing nodes (438) indicates a temperature value corresponding to the electric machine (300A, 300B, 302A), and responsive to a non-responsive condition of the first sensing node (438), the controller (182) is configured to derate the electric machine (300A, 300B, 302A) immediately or after a predetermined time period.

5. The hybrid-electric propulsion system (150) of any preceding claim, wherein the controller (182) is configured to determine a time period for the thermal anomaly to reach a maximum value, and wherein the controller (182) is configured to derate the electric machine (300A, 300B, 302A) in response to an expiration of the time period.

6. The hybrid-electric propulsion system (150) of any preceding claim, wherein a first sensing node (438) of the one or more sensing nodes (438) indicates a temperature value corresponding to the electric machine (300A, 300B, 302A), and responsive to a non-responsive condition of the first sensing node, the controller (182) is configured to estimate a thermal condition of the electric machine (300A, 300B, 302A) based on at least one electrical parameter of the electric machine (300A, 300B, 302A).

7. The hybrid-electric propulsion system (150) of any preceding claim, further comprising a power converter (312) electrically connected to the electric machine (300A, 300B, 302A), and wherein at least one sensing node (438) of the one or more sensing nodes (438) is connected to the power converter (312), and responsive to detecting the thermal anomaly corresponding to the power converter (312) based on the at least one sensing node (438) connected to the power converter (312), the controller (182) is configured to adjust the flow of the at least one heat exchange fluid to the electric machine (300A, 300B, 302A).

8. The hybrid-electric propulsion system (150) of any preceding claim, wherein at least one sensing node (438) of the one or more sensing nodes (438) is configured to determine at least one of an ambient thermal condition or a load condition of the gas turbine engine (210A, 210B), and wherein the controller (182) is configured to adjust flow of the at least one heat exchange fluid to the electric machine (300A, 300B, 302A) based on at least one of the ambient condition or the load condition.

9. The hybrid-electric propulsion system (150) of claim 8, wherein the controller (182) is configured to precondition the thermal management system (306) prior to a predicted occurrence of the ambient thermal condition or the load condition.

10. The hybrid-electric propulsion system (150) of any preceding claim, wherein the controller (182) is configured to inject one or more frequency signals to the electric machine (300A, 300B, 302A) to generate the one or more signals collected by the controller (182).

11. A method for thermal management for a hybrid-electric propulsion system (150) of an aircraft (100), the hybrid-electric propulsion system (150) comprising a gas turbine engine (210A, 210B) having a high pressure system, a low pressure system, and an electric machine (300A, 300B, 302A) coupled to one of the high pressure system or low pressure system, the method comprising:
flowing one or more heat exchange fluids via a thermal management system (306) defining one or more thermal management system flowpaths (307, 401) to the electric machine (300A, 300B, 302A);
collecting, by a controller (182), one or more signals from one or more sensing nodes (438) connected to at least one of the one or more thermal management system flowpaths (307, 401) or the electric machine (300A, 300B, 302A);
analyzing, by the controller (182), the one or more signals to detect a thermal anomaly corresponding to at least one of the electric machine (300A, 300B, 302A) or the thermal management system (306); and
responsive to detecting the thermal anomaly, performing, by the controller (182), at least one of:
adjusting a flow of at least one heat exchange fluid of the one or more heat exchange fluids; or
derating the electric machine (300A, 300B, 302A).

12. The method of claim 11, further comprising, detecting, by the controller (182), the thermal anomaly based on at least one of:
a temperature value corresponding to a stator coil of the electric machine (300A, 300B, 302A); or
an electrical parameter corresponding to the electric machine (300A, 300B, 302A).

13. The method of claim 11 or 12, wherein the one or more thermal management system flowpaths (307, 401) comprise a first thermal management system flowpath (307, 401) and a second thermal management system flowpath (307, 401), and wherein, responsive to detecting the thermal anomaly corresponding to the first thermal management system flowpath (307, 401), increasing, by the controller (182), the flow of the at least one heat exchange fluid flowing via the second thermal management system flowpath (307, 401).

14. The method of any of claims 11 to 13, wherein a first sensing node (438) of the one or more sensing nodes (438) indicates a temperature value corresponding to the electric machine (300A, 300B, 302A), and responsive to a non-responsive condition of the first sensing node (438), derating, by the controller (182), the electric machine (300A, 300B, 302A).

15. The method of any of claims 11 to 14, further comprising determining, by the controller (182), a time period for the thermal anomaly to reach a maximum value, and further comprising derating, by the controller (182), the electric machine (300A, 300B, 302A) in response to an expiration of the time period.
